# EUROPEAN PATENT APPLICATION

(11) **EP 4 834 089 A1**
(43) Date of publication of application: **04.11.2026**
(21) Application number: 23963146.8
(22) Date of filing: 27.12.2023
(51) Int. Cl.: A01D 34/86

(54) **WORK MACHINE**

(71) Applicant: Kubota Corporation, Osaka-shi, Osaka 530-0011 (JP)
(72) Inventor: FUJIWARA, Tetsuya, Sakai-shi, Osaka 590-0908 (JP)
(74) Representative: Cabinet Beau de Loménie
(86) International application number: PCT/JP2023/047005
(87) International publication number: WO 2025/141797

(57) **Abstract**

There has been a demand for a work machine that has a simple configuration, and can stabilize its posture even when moving on the slope ground, and can improve work efficiency. A work machine includes: a machine body 10; a plurality of ground wheels 11 supporting the machine body 10 to enable moving and traveling of the machine body 10; a work device A provided at a lower part of the machine body 10 and configured to perform a ground-work; and a thrust generator 17 configured to generate thrust in such a manner that a portion of the machine body 10 located on an uphill side of a slope is pushed downward while the machine body 10 is tilted. The thrust generator 17 includes a plurality of rotary wings 18 arranged side by side and configured to generate the thrust by creating upward air flow by being driven to rotate. The plurality of rotary wings 18 are an even number of rotary wings 18 and adjacent rotary wings 18 among the plurality of rotary wings 18 are configured to be driven in different rotation directions. The thrust generator 17 applies the thrust to the machine body at a thrust acting point Q set between the even number of rotary wings 18.

## Description

### Technical Field

The present invention relates to a work machine such as a mower or a pesticide sprayer that performs work while moving on the slope ground.

### Background Art

In the case of a mower, which is an example of a work machine, there have been some conventional work machines having a long control handle that extends laterally outward from the machine body of the work machine and is pivotally supported on the machine body (see, for example, Patent Document 1). With this configuration, an operator operates the control handle and enables the work machine to perform mowing work while moving on the slope ground.

### Prior Art Document

### Patent Document

Patent Document 1: JP 2007-53992A

### Disclosure of the Invention

### Problem to be Solved by the Invention

In the above-described conventional configuration, the operator must always operate and control the work machine, which is disadvantageous in that work cannot be performed efficiently if the slope ground extends over large areas. Therefore, it is conceivable to develop a configuration including a work device movable by being towed by an unmanned flight vehicle, but when moving across the slope ground in this unmanned state, the posture of the work device may become unstable, causing a risk that it cannot perform mowing work properly.

In order to avoid the above-described problems, a configuration in which the distance between the ground wheels in a left-right direction is increased to stabilize the posture is conceivable. However, this configuration requires components such as an actuator and a mechanical sliding mechanism, which could result in a complex structure and higher costs.

Therefore, there has been a demand for a work machine that has a simple configuration, and can stabilize its posture even while moving on the slope ground.

### Means for Solving Problem

A feature configuration of a work machine according to the present invention is directed to a work machine including a machine body; a plurality of ground wheels supporting the machine body to enable moving and traveling of the machine body; a work device provided at a lower part of the machine body and configured to perform a ground-work; and a thrust generator configured to generate thrust in such a manner that a portion of the machine body located on an uphill side of a slope is pushed downward while the machine body is tilted, the thrust generator including a plurality of rotary wings arranged side by side and configured to generate the thrust by creating an upward air flow by being driven to rotate, the plurality of rotary wings being an even number of rotary wings, and adjacent rotary wings among the plurality of rotary wings being configured to be driven in different rotation directions, and the thrust generator applying the thrust to the machine body at a thrust acting point set between the even number of rotary wings.

According to the present invention, while the work machine is traveling on the slope ground and performing work with the plurality of ground wheels being in ground contact, upon activation of the thrust generator, the thrust generated by the thrust generator pushes the portion of the machine body located on the uphill side of the slope downward. The thrust generator generates the thrust by creating an upward air flow by activating the plurality of rotary wings arranged side by side. As a result, a simple configuration of driving and rotating the rotary wings can prevent the posture from becoming unstable.

Since two adjacent rotary wings are driven in different rotation directions, the opposing forces acting on the main body of the thrust generator resulting from the reaction to the rotation of the rotary wings cancel out each other, thereby making it possible to suppress vibration. Furthermore, since a thrust acting point, where the thrust generator applies thrust to the machine body, is set between an even number of rotary wings, thrust can be efficiently applied to the machine body at this thrust acting point while vibration is suppressed, as described above.

Accordingly, it is possible to provide a work machine that has a simple configuration, and can stabilize its posture even when moving on the slope ground.

According to the present invention, preferably, the thrust acting point is set at a position in a vicinity of a gravity center position of the machine body.

With this configuration, by applying thrust at a position in the vicinity of the gravity center position, the thrust generator can efficiently apply the generated thrust.

According to the present invention, preferably, the work machine includes a plurality of mounting sections configured to be used to mount the thrust generator to the machine body.

With this configuration, the thrust generator is mounted to the machine body at a plurality of positions, making it possible to securely support the thrust generator in a stable state.

According to the present invention, preferably, the work machine includes a posture detection means for detecting a posture change state of the machine body; and a control unit configured to control activation of the thrust generator, wherein in response to the machine body being tilted, the control unit activates the rotary wings based on a result of detection by the posture detection means to eliminate the tilt of the machine body.

With this configuration, the posture detection means is used to detect a posture change state of the machine body, and it is possible to efficiently activate the thrust generator without waste depending on the tilted state, that is, for example, if it is determined that the machine body is tilted at a gentle angle, the thrust generator is not activated, while if it is determined that the machine body is tilted at a tilt angle at which a portion of the machine body located on an uphill side of a slope may rise above the ground surface and its posture may become unstable, the thrust generator is activated.

According to the present invention, preferably, the work device performs mowing work while moving along a ground surface.

With this configuration, the work machine can perform mowing work excellently as the machine body moves even when the work machine performs work while moving on the slope ground.

### Brief Description of the Drawings

FIG. 1 is a front view of a work system.
FIG. 2 is a plan view of the work system.
FIG. 3 is a plan view of a mower.
FIG. 4 is a front view of the mower.
FIG. 5 is a plan view of a protective member.
FIG. 6 is a side view of the protective member.
FIG. 7 is a plan view of a rotational action region of a working propeller.
FIG. 8 is a side view of the rotational action region of the working propeller.
FIG. 9 is a control block diagram.
FIG. 10 is a front view of the mower in a mowing work mode.
FIG. 11 is a front view of the mower in a mowing work mode according to another embodiment.
FIG. 12 is a side view of the mower in a mowing work mode according to yet another embodiment.
FIG. 13 is a side view of the mower in a mowing work mode according to yet another embodiment.

### Best Mode for Carrying out the Invention

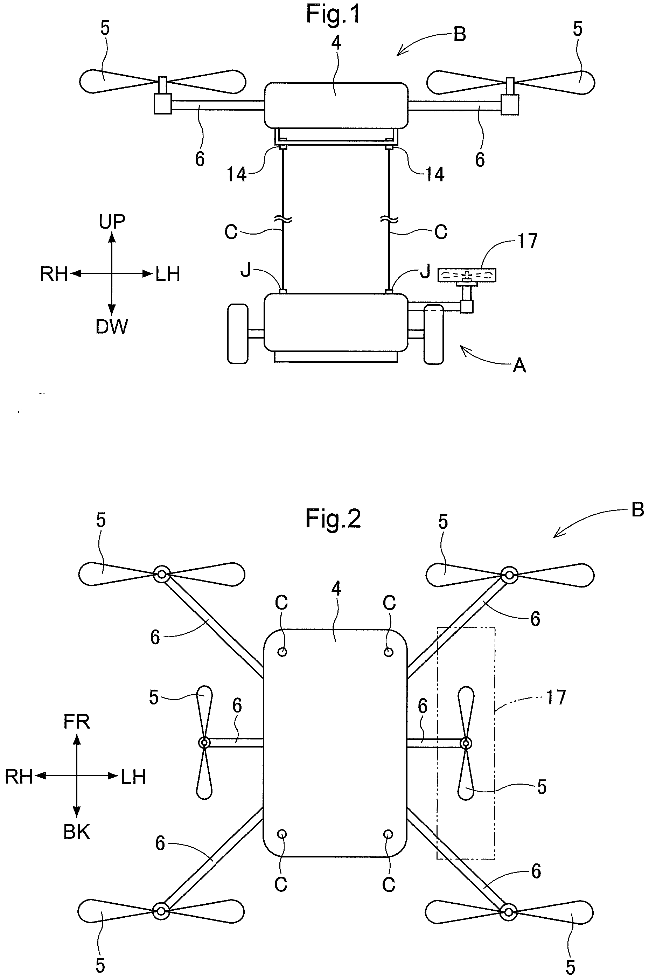

Hereinafter, an embodiment for implementing the present invention will be described with reference to the drawings. In the following description, unless otherwise noted, the direction of an arrow FR shown in FIG. 2 is "forward", the direction of an arrow BK is "rearward", the direction of an arrow LH shown in FIGS. 1 and 2 is "leftward", and the direction of an arrow RH is "rightward". The direction of an arrow UP shown in FIG. 1 is "upward" and the direction of an arrow DW is "downward".

FIGS. 1 and 2 show a work system, in which a mower A, serving as a work machine, is suspended and held by an unmanned flight vehicle via suspension tools. The work system includes a flight vehicle B, which is an unmanned flight vehicle called a drone, and a mower A suspended and held by the flight vehicle B via a plurality of suspension tools C. The flight vehicle B is configured to fly alone. The flight vehicle B includes a body section 4, a plurality of flying propellers 5 serving as flying rotary wings, and a plurality of arm sections 6.

Note that the numbers of flying propellers 5 and arm sections 6 are not limited, but in the present embodiment, six flying propellers 5 and six arm sections 6 are provided. The six arm sections 6 extend from the body section 4 to the front left, front right, rear left, rear right, right side, and left side, respectively.

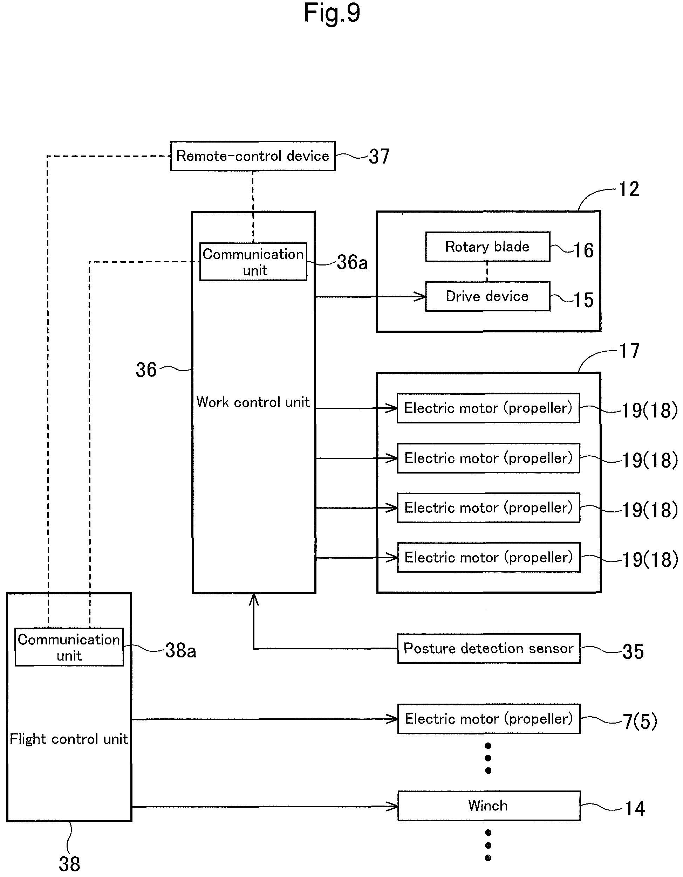

Each of the flying propellers 5 is driven by the drive force of an electric motor 7 (see FIG. 9). The flight vehicle B can fly by driving the flying propellers 5. In other words, the flying propellers 5 are driven to rotate, thereby causing air to flow downward to generate upward thrust. By driving each of the flying propellers 5, the flight vehicle B can move in any direction, namely, an up-down direction, a front-rear direction, and a left-right direction, while floating in the air. The flight vehicle B can hover by driving each of the flying propellers 5.

### [Overall Configuration of Mower]

The mower A includes a machine body 10, a plurality of ground wheels 11 supporting the machine body 10 to enable moving and traveling of the machine body 10, and a mowing device 12 provided at a lower part of the machine body 10 and serving as a ground-work unit for performing mowing work, which is a ground-work. The ground wheels 11 are provided on both the left and right sides of a front part of the machine body 10 and on both the left and right sides of a rear part of the machine body 10. The four ground wheels 11 are supported so as to be rotatable about lateral axes extending along the left-right direction.

The mower A according to the present embodiment is provided with a total of four ground wheels 11 on both the left and right sides of the front part of the machine body 10 and on both the left and right sides of the rear part of the machine body 10. The mower A can be towed by the flight vehicle B, which moves while flying, via four suspension tools C, and can move while following the flight vehicle B. The ground wheels 11 rotate freely while being in contact with and following the ground by being towed, and supports the machine body 10. The suspension tools C are wires. The suspension tools C are not limited to wires, but may be ropes, chains, or the like.

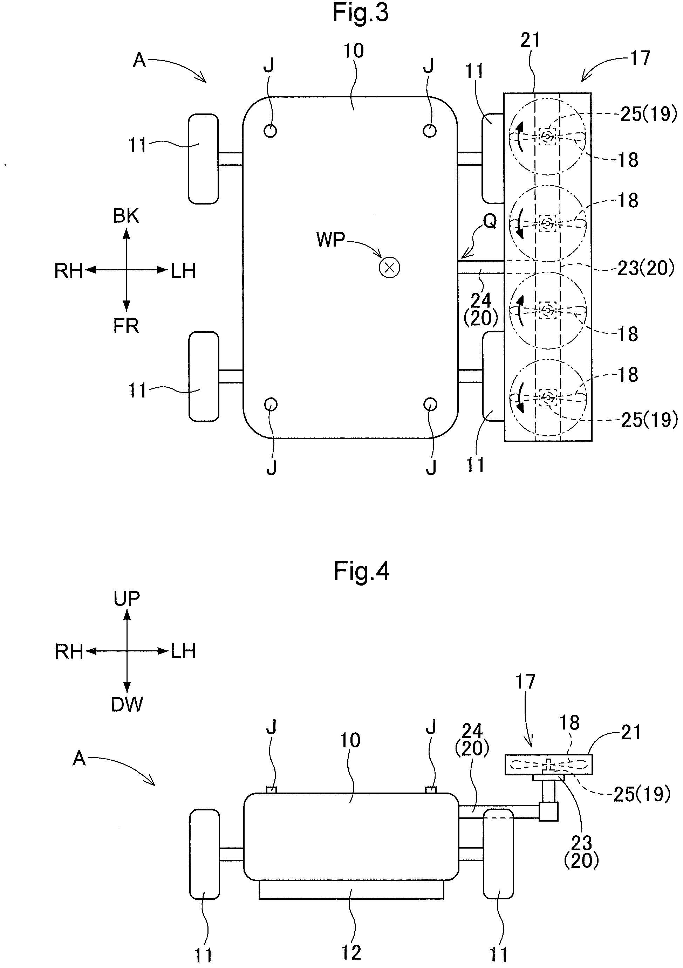

The machine body 10 has a plurality of (four) suspension points J to each of which a suspension tool C is connected, the suspension points J being provided at intervals while surrounding a gravity center position WP in a plan view. As shown in FIG. 3, four suspension points J are provided for the gravity center position WP of the entire mower A while surrounding the gravity center position WP in a plan view, and spaced at intervals in the front-rear direction and the left-right direction of the machine body 10. One end of a suspension tool C is connected to each suspension point J. The other end of the suspension tool C is connected to the body section 4 of the flight vehicle B.

The state of suspension by the suspension tools C can be changed and adjusted. In other words, a winch 14 is provided at the end of each suspension tool C on the flight vehicle B side to allow the suspension tool C to be wound in and wound out. By operating the winch 14 to adjust the wound-out amount of the suspension tool C, it is possible to change the relative position between the connection point on the body section 4 of the flight vehicle B and the connection point (suspension point J) on the mower A that are connected to each other via the suspension tool C.

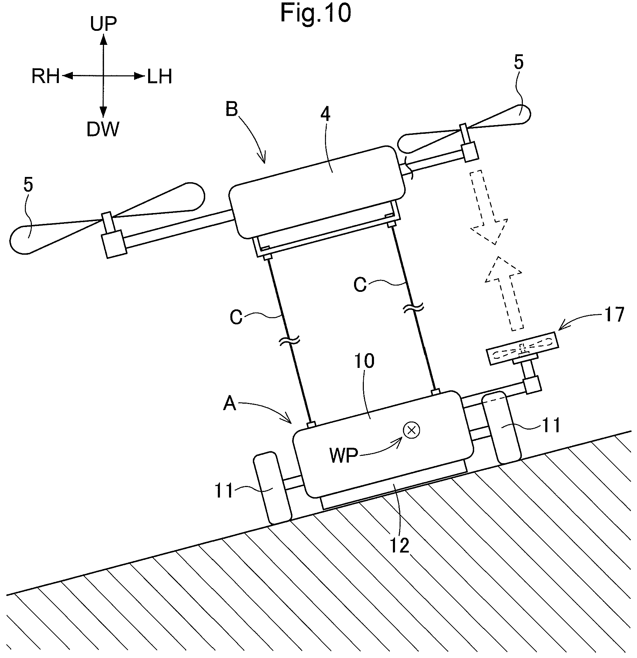

For example, by operating the winches 14 for the two suspension tools C on one side in the left-right direction in the winding up direction, the lengths of the wound-out suspension tools C are reduced compared to those of the two suspension tools C on the other side in the left-right direction. With this, it is possible to achieve a posture of the mower A in which the portion on the one side in the left-right direction is raised above the portion on the other side. This posture can cause the mower A in a sloped work site to move forward in a direction orthogonal to the slope direction by being towed by the flight vehicle B (see FIG. 10).

As shown in FIG. 3, the intervals between the suspension points J are greater than half of the overall width of the machine body 10 in the direction in which these suspension points J are next to each other. For example, the interval between the suspension points J for the two suspension tools C on the front side is greater than half of the overall width of the machine body 10 in the left-right direction, and the interval between the suspension points J for the two suspension tools C on the rear side is greater than half of the overall width of the machine body 10 in the left-right direction. Furthermore, the interval between the suspension points J for the two suspension tools C on the right side is greater than half of the overall width of the machine body 10 in the front-rear direction, and the interval between the suspension points J for the two suspension tools C on the left side is greater than half of the overall width of the machine body 10 in the front-rear direction.

The plurality of suspension points J are located on the mower A on the downstream side in the moving direction of the flight vehicle B and the upstream side in the moving direction of the flight vehicle B, and the mower A is towed in a state where a suspension load applied to the suspension points J on the downstream side in the moving direction is greater than half of the total suspension load applied to the mower A. If a suspension load applied to the suspension points J on the downstream side in the moving direction is less than half of the total suspension load, the state of suspension by the suspension tools C is changed and adjusted so that the suspension load applied to the suspension points J on the downstream side in the moving direction is greater than half of the total suspension load.

The state where suspension load applied to the suspension points J on the downstream side in the moving direction is less than half of the total suspension load refers to the state where the suspension load exerted by the two suspension tools C located on the downstream side in the moving direction is smaller than the suspension load exerted by the two suspension tools C located on the upstream side in the moving direction. So, for example, the lengths of the two suspension tools C located on the downstream side in the moving direction are reduced, or the lengths of the two suspension tools C located on the downstream side in the moving direction are increased. The winches 14 can be operated to enable the state of suspension by the suspension tools C to be changed and adjusted so that the aforementioned suspension load is greater than half of the total suspension load.

The flight vehicle B can hold the entire mower A in a state where it is floating above the ground. When the mowing destination is far away, the flight vehicle B can fly and move while suspending and holding the entire mower A so that it is floating above the ground. This allows for efficient work.

The mowing device 12 includes a drive device 15 for mowing and a rotary blade 16 that is driven and rotated by the drive device 15 (see FIG. 9). Using motive power of the drive device 15, the rotary blade 16 can rotate at high speed to perform mowing work. The drive device 15 may be an engine or an electric motor. Each of the ground wheels 11 is supported on a spindle so as to be freely rotatable, and in cases of performing mowing work, the ground wheels 11 support the machine body 10 by contacting and following the ground while rotating freely.

### [Thrust Generator]

The mower A includes a thrust generator 17 that generates thrust so that a portion of the machine body 10 located on the uphill side of a slope is pushed downward in response to the machine body 10 being tilted. The thrust generator 17 is provided on a lateral side of the machine body 10. The mower A is often used to perform work for mowing weeds growing on the slope ground. During the work on the slope ground, as shown in FIG. 10, the machine body 10 is moved in a direction orthogonal to the slope direction and mowing work is performed.

Depending on the condition of a work site, the slope angle of the slope surface may be large and the tilt angle of the machine body 10 in the left-right direction may become large. If the tilt angle of the machine body 10 in the left-right direction becomes larger and the machine body 10 is further tilted more than its maximum tilt angle, the uphill side (mountain side) of the machine body 10 in the slope direction will be raised, causing a risk that the mowing device 12 floats above the ground. Therefore, in the mower A according to the present embodiment, the thrust generator 17 is provided on a lateral side of the machine body 10 on the side corresponding to the uphill side (mountain side) in the slope direction, out of the left and right sides of the machine body 10.

The thrust generator 17 includes a plurality of working propellers 18 serving as working rotary wings, a plurality of electric motors 19 that drive and rotate the respective working propellers 18, a support frame 20 that supports the plurality of electric motors 19, and a protective member 21 that covers the periphery of the plurality of working propellers 18.

The working propellers 18 are driven and rotated by the electric motors 19 to allow the gas (air) to flow upward to generate thrust. The plurality of working propellers 18 are provided side by side along the front-rear direction of the machine body. An even number of (specifically, four) working propellers 18 are provided, and adjacent working propellers 18 are driven so as to rotate in different directions.

The working propellers 18 create an upward air flow, which generates downward thrust so that the entire device is pushed downward. As a result, the thrust generator 17 can generate thrust so that a portion of the machine body 10 located on the uphill side of a slope is pushed downward when the machine body 10 is tilted.

The support frame 20 includes a frame body section 23 that extends along the front-rear direction of the machine body and supports the four electric motors 19, and a connection arm 24 that extends from the central part of the frame body section 23 in the front-rear direction of the machine body 10 toward the machine body 10 and is connected to the machine body 10.

The thrust generator 17 is provided with propeller support sections 25 that support the working propellers 18 so that they can rotate. The propeller support sections 25 are provided below the working propellers 18 while being attached to the frame body section 23 of the support frame 20. The electric motors 19 are supported in one piece with the propeller support sections 25. Therefore, four electric motors 19 are supported by the frame body section 23.

A thrust acting point Q at which the thrust generator 17 applies thrust to the machine body 10 is set among the even number of working propellers 18. The position at which the thrust generator 17 applies thrust to the machine body 10 is a connection point between the support frame 20 and the machine body 10. As shown in FIG. 3, the connection arm 24 of the support frame 20 is provided at the midpoint of four working propellers 18 lined up along the front-rear direction of the machine body 10, that is, between the second working propeller 18 and the third working propeller 18 from the front. Therefore, the position of the connection arm 24 is set between the even number of (four) working propellers 18. The even number is not limited to four, and may be changed to two, six, eight, or the like.

The thrust acting point Q is set at a position close to the gravity center position WP of the machine body 10. As shown in FIG. 3, in the mower A according to the present embodiment, the gravity center position WP of the machine body 10 is located at an intermediate position in the front-rear direction and is offset toward the thrust generator 17. As a result of the thrust generator 17 being provided, the gravity center position WP is offset toward one lateral side from the central position in the left-right direction. The connection arm 24 is connected to the machine body 10 at a position close to the gravity center position WP. Therefore, the thrust acting point Q is set at a position close to the gravity center position WP of the machine body 10.

The thrust generator 17 is located at a position higher than the gravity center position WP when the machine body 10 is tilted to the maximum tilt angle, and generates thrust so that a portion of the machine body 10 located on the uphill side of the slope is pushed downward.

When the machine body 10 moves on the slope ground, if the machine body 10 is tilted significantly and the gravity center position WP exceeds the limit, there is a risk that the machine body 10 will fall toward the lower side of the slope. Therefore, as shown in FIG. 10, the thrust generator 17 is arranged so as to be located at a position higher than the gravity center position WP in a state where the machine body 10 is tilted to the maximum tilt angle that is close to a slope angle at which there is a risk of falling.

If the machine body 10 is tilted, a portion of the machine body 10 on the uphill side of the slope may float due to the tilt posture. However, the thrust generator 17 generates thrust so that the portion of the machine body 10 on the uphill side of the slope is pushed downward from the position higher than the gravity center position WP, thereby preventing the portion of the machine body 10 on the uphill side of the slope from floating and causing the machine body 10 to be pushed downward. As a result, it is possible to efficiently perform mowing work while preventing the mowing device 12 from floating above the ground.

### [Protective Member]

The protective member 21 is described below.

The protective member 21 includes a plurality of crosspiece members 26, and a plurality of ventilation sections 27 are formed between the crosspiece members 26 to allow the flow of air generated by the working propellers 18. In an upper part 21A of the protective member 21, the area occupied by the plurality of crosspiece members 26 relative to the total area of rotational action regions Y of the working propellers 18 when viewed in an air flowing direction is between 1 and 2 percent, and more preferably 1.4 percent.

The number of crosspiece members in a lower part provided below the working propellers 18 is less than that in the upper part 21A located above the working propellers 18. According to the present embodiment, no crosspiece member is provided in the lower part provided below the working propellers 18, and the underside of the working propellers 18 is open. Instead of the configuration where the underside of the working propellers 18 is open, a smaller number of crosspiece members may be provided in the lower part provided below the working propellers 18 than that in the upper part 21A located above the working propellers 18.

A lateral part 21B of the protective member 21 that is located on the outer side in a radial direction of the working propellers 18 includes ventilation sections 28 that prevent the rotating working propellers 18 at the working propellers 18 from passing therethrough.

The following describes a specific configuration of the protective member 21.

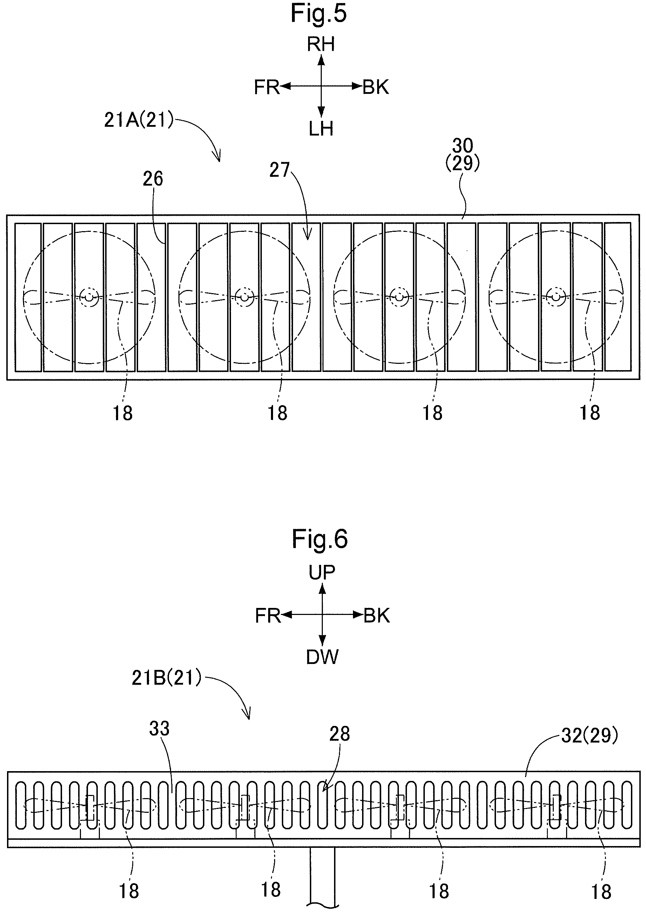

As shown in FIGS. 5 and 6, the protective member 21 includes a frame body 29 that is formed in one piece to enclose the surrounding area. The protective member 21 includes the upper part 21A formed in a rectangular shape in a plan view so as to cover all the four working propellers 18 from above, and four lateral parts 21B covering the outer peripheries of all the four working propellers 18.

As shown in FIG. 5, the upper part 21A of the protective member 21 includes an upper frame section 30 that constitutes part of the frame body 29 and has a rectangular shape that is continuous along the outer peripheries, and a plurality of upper crosspiece members 26 that connect the left and right portions of the upper frame section 30. The plurality of upper crosspiece members 26 are arranged at predetermined intervals along the front-rear direction of the machine body 10. The predetermined intervals are considered safe enough to prevent accidental insertion of a human hand. The ventilation sections 27 for allowing air flow are formed by the spaces between the upper crosspiece members 26.

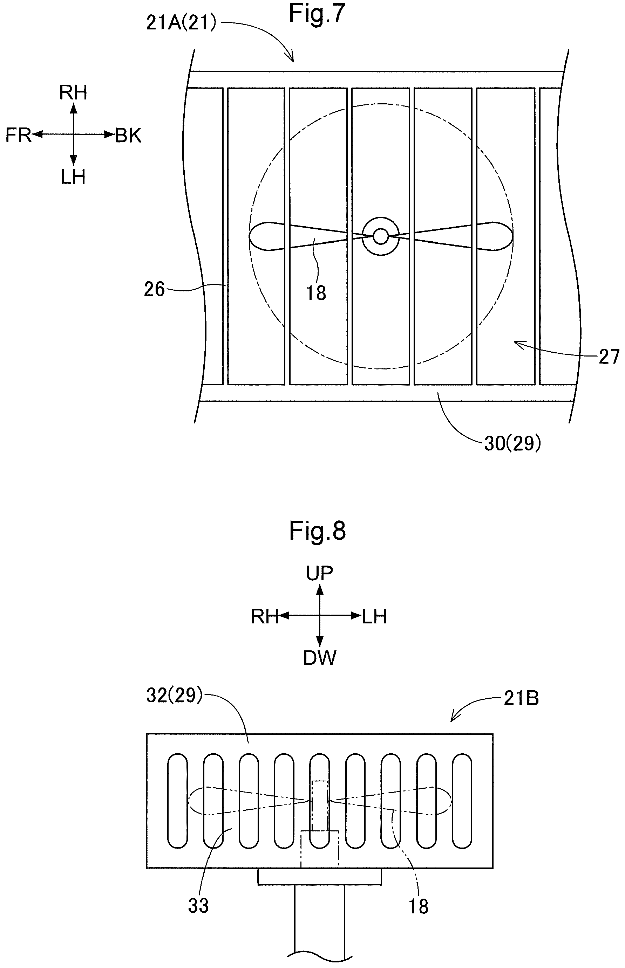

As shown in FIG. 8, the number and width of the upper crosspiece members 26 are set in such a manner that the area occupied by the plurality of upper crosspiece members 26 relative to the total area of the rotational action regions Y (circular region) of the working propellers 18 in an up-down direction view, which represents the air flowing direction, is 1.4 percent or less. Note that the aforementioned occupied area is not limited to 1.4 percent or less, but is sufficient if it is within a range of 1 to 2 percent.

As shown in FIGS. 6 and 7, the lateral part 21B of the protective member 21 forms part of the frame body 29 and includes a side frame section 32 in a rectangular shape in a horizontal direction view, and a plurality of lateral crosspiece members 33 that connect the upper and lower portions of the side frame section 32.

The plurality of lateral crosspiece members 33 are arranged at predetermined intervals along the front-rear direction of the machine body. Ventilation sections 28 are formed by spaces between the lateral crosspiece members 33. The predetermined intervals are intervals that are narrower than the distance between the upper crosspiece members 26, preventing the working propellers 18 from passing therethrough. It allows air to be drawn in through the ventilation sections 28 as the working propellers 18 rotate, and even if the working propeller 18 breaks, it is possible to prevent fragments from flying outward.

### [Thrust Generation State]

As shown in FIG. 2, the working propellers 18 are located within a thrust generation region of the flying propellers 5. Specifically, the working propellers 18 are located within the thrust generation region of the flying propellers 5 located on the side on which the thrust generator 17 is provided, among the plurality of flying propellers 5 of the flight vehicle B.

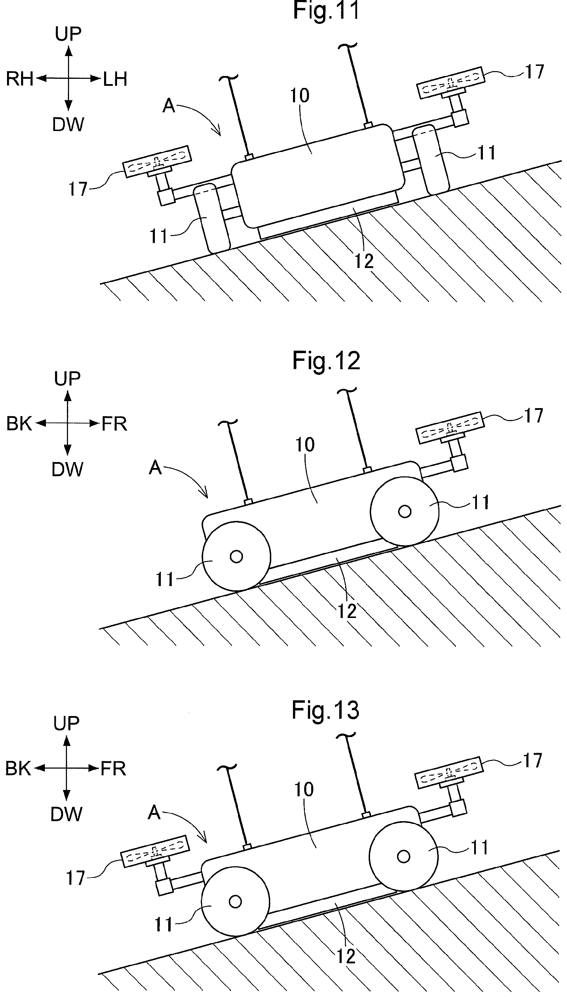

As shown in FIG. 11, the air flowing direction of the working propellers 18 and the air flowing direction of the flying propellers 5 are both the up-down direction, and they are in the same or substantially the same direction. The flight vehicle B flies in such a manner that the thrust generation region of the flying propellers 5 overlaps the thrust generation region of the working propellers 18 along the air flowing direction. In other words, the flying status of the flight vehicle B is set in such a manner that the flight vehicle B flies with the mower A located directly below and flies along the front-rear direction of the machine body of the mower A.

In this configuration, the working propellers 18 generate an upward flow of air, thus opposing the downward flow of air caused by the flying propellers 5. As a result, it is possible to assist the upward thrust of the flight vehicle B generated by the flying propellers 5, thereby improving the efficiency of thrust of the flight vehicle B. Furthermore, the flying propellers 5 can assist the downward thrust generated by the working propellers 18, thereby improving the efficiency of thrust of the thrust generator 17.

If the thrust generation region of the flying propeller 5 overlaps the thrust generation region of the working propellers 18 along the air flowing direction, the thrust generation may be reduced in either the flying propellers 5 or the working propellers 18, or both. This can reduce the amount of required power and fuel, saving energy.

### [Control Structure]

The mower A includes a posture detection sensor 35 serving as a posture detection means for detecting a posture change state of the machine body 10, and a work control unit 36 serving as a control unit for controlling the operations of the drive device 15 and the thrust generator 17. Based on the detection result of the posture detection sensor 35, the work control unit 36 controls the operations of the working propellers 18 of the thrust generator 17 to allow air to flow upward in response to the machine body 10 being tilted. Specifically, the work control unit 36 controls the operation of the electric motors 19 that drive the working propellers 18. As a result, the portion of the machine body 10 on the uphill side of the slope is pushed downward.

As shown in FIG. 9, the work control unit 36 can transmit information through wireless communication to and from a remote-control device 37, which is operated by the operator via a communication unit 36a. The operator operates the remote-control device 37 to give instructions regarding work content. The work control unit 36 controls the operations of the components in accordance with the instructions. Furthermore, the work control unit 36 can transmit information through wireless communication to and from a flight control unit 38 of the flight vehicle B. The flight control unit 38 can transmit information through wireless communication to and from the remote-control device 37 via the communication unit 38a. The flight control unit 38 controls the operations of the plurality of electric motors 19 for driving the propellers and the winches 14 in accordance with the instructions from the remote-control device 37 and the work control unit 36.

In a case of performing mowing work using the mower A while flying the flight vehicle B, the operator operates the remote-control device 37 to instruct the flight vehicle B to fly and move toward a mowing work site while towing the mower A using the suspension tools C. If the mowing work site is far away, the flight vehicle B moves while the mower A is floating above the ground. At this time, if the length of any of the suspension tools C is not appropriate and is loose, the winch 14 is operated to adjust the state of suspension of the suspension tool C so that the length is appropriate, by giving instructions from the remote-control device 37.

In a case of performing mowing work, the mowing device 12 is switched to the work mode in response to instructions from the remote-control device 37, the ground wheels 11 are brought into contact with the ground, and the mower A is towed by the flight of the flight vehicle B via the suspension tools C. At this time, the mower A is towed so as to move along the front-rear direction of the machine body. The operator may also manually control the mower A to perform mowing work while moving, or may also set automated control in such a manner that the mower A performs mowing work along a preset path.

If automated control is set in such a manner that the mower A performs mowing work along a set path, the flight vehicle B may include a satellite positioning device capable of measuring its current position, and the flight control unit 38 may be configured to perform control in such a manner that the flight vehicle B automatically flies along the preset path. The satellite positioning device has a known configuration, and receives GNSS (Global Navigation Satellite System) signals from satellites, generates positioning data indicating the position of the flight vehicle B based on the received signals, and transmits the generated positioning data to the control unit of the flight vehicle B. GNSS may be GPS, QZSS, Galileo, GLONASS, BeiDou, or the like.

If the mower A is to perform work for mowing weeds growing on a slope ground, the mowing work is performed by towing the mower A in such a manner that the machine body 10 moves in a direction orthogonal to the slope direction, as shown in FIG. 10.

The operator visually observes the state of suspension by the four suspension tools C, and if a suspension load applied to the suspension points J on the downstream side in the moving direction is less than half of the total suspension load, the operator changes and adjusts the state of suspension by the suspension tools C so that the aforementioned suspension load is greater than half of the total suspension load.

In other words, if the two suspension tools C on the downstream side in the moving direction are longer than the two suspension tools C on the upstream side in the moving direction and are loose, the suspension loads applied to the suspension points J on the downstream side in the moving direction are too small. Therefore, the lengths of the two suspension tools C on the downstream side in the moving direction are reduced or the lengths of the two suspension tools C on the downstream side in the moving direction are increased. The winches 14 are operated to change and adjust the state of suspension by the suspension tools C so that the corresponding suspension loads are greater than half of the total suspension load.

Instead of changing and adjusting the state of suspension by human judgment by the operator, a configuration is also possible in which, for example, a load detector (not shown) that detects the towing load associated with the plurality of suspension tools C is provided, and the flight control unit 38 automatically changes and adjusts the state of suspension by the suspension tools C based on the information detected by the load detector.

Upon detecting, during the working on the slope ground, that the tilt angle of the machine body 10 in the left-right direction is a preset tilt angle or greater based on the detection result of the posture detection sensor 35, the work control unit 36 activates the thrust generator 17. As a result, thrust is generated in such a manner that the portion of the machine body 10 on the uphill side of the slope is pushed downward, thus preventing the portion on the uphill side of the slope from being raised upward due to the tilt of the machine body 10 so that the mowing device 12 floats from the ground surface, and avoiding the mower A from falling and other disadvantageous situations.

### [Other Embodiments]

(1) A plurality of mounting sections may be provided that are configured to be used to mount the thrust generator 17 to the machine body 10. For example, a configuration is also possible where connection arms 24 are provided at an intermediate position between, out of four working propellers 18, the working propeller 18 on one end side and the working propeller 18 adjacent thereto, and at an intermediate position between the working propeller 18 on the other end side and the working propeller 18 adjacent thereto. A work machine including six working propellers 18 may have a configuration in which connection arms are provided at intermediate positions between adjacent working propellers, that is, three connection arms are provided.
(2) The thrust acting point Q by the thrust generator 17 may be set at a position apart from the gravity center position WP of the machine body 10.
(3) The flight vehicle B and the mower A (work device) may be suspended and held by suspension tools consisting of rigid bodies, rather than by wires.
(4) A configuration is also possible where the ground wheels 11 are traveling wheels, and the work is executed while the mower is towed via the suspension tools C with the traveling wheels being in ground contact. In this embodiment, the traveling wheels are driven to rotate using the power of the drive device 15 mounted on the machine body 10. The traveling wheels are driven and rotated to move along the towing direction by the flight vehicle B. This configuration enables smooth movement on the ground with the travel driving force of the traveling wheels and facilitates efficient mowing.
(5) As shown in FIG. 11, a configuration is also possible where thrust generators 17 are provided on both left and right sides of the machine body 10. In this configuration, while the mower A (work device) is moving on the slope ground in a direction orthogonal to the slope direction, even if the moving direction of the machine body is reversed, it is sufficient to activate the thrust generator 17 located on the uphill side of the slope, out of the thrust generators 17 on the left and right sides. In addition, in this embodiment, the thrust generator 17 located on the uphill side of the slope may generate thrust to push the portion of the machine body 10 on the uphill side of the slope downward, and the thrust generator 17 located on the lower side of the slope may generate thrust to push the portion of the machine body 10 on the lower side of the slope upward.
(6) A configuration is also possible where, while the mower A is moving on the slope ground in the slope direction, at least a thrust generator 17 located on the uphill side of the slope, out of the front and rear portions of the machine body 10, is activated. For example, as shown in FIG. 12, the machine body 10 may include, in its front portion, a thrust generator 17, and while the mower A is traveling up the slope ground, the thrust generator 17 may be configured to be activated. Furthermore, as shown in FIG. 13, the machine body 10 may include thrust generators 17 in its front and rear portions, respectively, and while the mower A is moving on the slope ground in the slope direction, even if the moving direction of the machine body is reversed, it is sufficient to activate the thrust generator 17 located on the uphill side of the slope, out of the thrust generators 17 on the front and rear sides.
(7) A configuration is also possible where the machine body 10 includes thrust generators 17 on both the left and right sides as well as on both the front and rear sides thereof. In this configuration, thrust can be generated to push the portion on the uphill side of the slope downward, regardless of the direction of movement, in either case where the mower A moves on the slope ground in a direction orthogonal to the slope direction or the mower A moves on the slope ground in the slope direction.
(8) A configuration is also possible where the thrust generator 17 is activated by the operator manually operating the remote-control device 37, regardless of a posture change of the mower A.
(9) The work device is not limited to the mower A, and various types of work devices, such as pesticide sprayers for applying pesticides can be used.
(10) The flight vehicle B may adopt a drive type of driving the propellers using an internal combustion engine (engine), or may adopt a parallel hybrid drive type of driving the propellers using both the electric motors 19 and the internal combustion engine. Alternatively, the flight vehicle B may adopt a series hybrid drive type of driving a generator using an internal combustion engine, and driving the electric motors 19 using the generated power. The flight vehicle B is not limited to an unmanned flight vehicle, and may also be a flight vehicle operated by humans.
(11) The work machine A may be configured to move by being towed by a traveling vehicle, which travels on the ground, and may be configured to use the ground wheels 11 as traveling wheels and perform work while traveling in a self-propelled manner by driving the traveling wheels 11 to rotate.

### Industrial Applicability

The present invention is applicable to a work machine such as a mower or a pesticide sprayer that performs work while moving on the slope ground.

### Description of Reference Signs

- 10:: Machine body
- 11:: Ground wheel
- 17:: Thrust generator
- 18:: Rotary wing
- 35:: Posture detection sensor (posture detection means)
- 36:: Work control unit (control unit)
- A:: Work device
- Q:: Thrust acting point

## Claims

1. A work machine comprising:
a machine body;
a plurality of ground wheels supporting the machine body to enable moving and traveling of the machine body;
a work device provided at a lower part of the machine body and configured to perform a ground-work; and
a thrust generator configured to generate thrust in such a manner that a portion of the machine body located on an uphill side of a slope is pushed downward while the machine body is tilted,
the thrust generator including a plurality of rotary wings arranged side by side and configured to generate the thrust by creating an upward air flow by being driven to rotate,
the plurality of rotary wings being an even number of rotary wings, and adjacent rotary wings among the plurality of rotary wings being configured to be driven in different rotation directions, and
the thrust generator applying the thrust to the machine body at a thrust acting point set between the even number of rotary wings.

2. The work machine according to claim 1,
wherein the thrust acting point is set at a position in a vicinity of a gravity center position of the machine body.

3. The work machine according to claim 1, comprising:
a plurality of mounting sections configured to be used to mount the thrust generator to the machine body.

4. The work machine according to claim 1, comprising:
a posture detection means for detecting a posture change state of the machine body; and
a control unit configured to control activation of the thrust generator,
wherein in response to the machine body being tilted, the control unit activates the rotary wings based on a result of detection by the posture detection means to eliminate the tilt of the machine body.

5. The work machine according to any one of claims 1 to 4,
wherein the work device performs mowing work while moving along a ground surface.
